# EUROPEAN PATENT APPLICATION

(11) **EP 3 522 037 A1**
(43) Date of publication of application: **07.08.2019**
(21) Application number: 18154538.5
(22) Date of filing: 31.01.2018
(51) Int. Cl.: G06F 17/27, G06N 99/00

(54) **FEEDBACK FOR A CONVERSATIONAL AGENT**

(71) Applicant: Digital Genius Limited, London, Greater London E14 5AB (GB)
(72) Inventor: BACHRACH, Yoram, London, E14 5AB (GB); ZUKOV GREGORIC, Andrej, London, E14 5AB (GB); COOPE, Samuel John, London, E14 5AB (GB); MAKSAK, Bohdan, London, E14 5AB (GB); NAUMOV, Mikhail, London, E14 5AB (GB)
(74) Representative: EIP

(57) **Abstract**

Certain examples described herein allow feedback to be exchanged between a conversational agent and an operator (so-called "bi-directional" feedback). Certain examples allow an incorrect response template to be indicated by the operator and the conversational agent to compute a contribution for tokens representative of how influential the tokens were in the prediction of the incorrect response template by an applied predictive model. The computed contribution is used to provide further feedback to the operator comprising potential tokens to disassociate with the incorrect response template. The operator then selects the tokens they wish to disassociate and the parameters of the predictive model are adjusted based on this feedback. By repeating this process, an accuracy of a conversational agent, in the form of the response templates that are selectable for a text dialogue, may be improved.

## Description

### Technical Field

The present invention relates to computing systems, and, in particular, methods and systems for processing text data that is exchanged between computing devices. Certain examples relate to providing feedback for a conversational agent, where the conversational agent uses a predictive model to compute responses.

### Background

Many users of computing devices prefer to interact with computing systems using natural language, e.g. words and sentences in the user's native language, as opposed to more restrictive user interfaces (such as forms) or using specific programming or query languages. For example, users may wish to ascertain a status of a complex technical system, such as a transport control system or a data center, or be provided with assistance in operating technical devices, such as embedded devices in the home or industry. Natural language interfaces also provide a much larger range of potential queries. For example, users may find that structured queries or forms do not provide options that relate to their particular query. This becomes more of an issue as computing systems increase in complexity; it may not be possible to enumerate (or predict) all the possible user queries in advance of operation.

To provide a natural language interface to users, conversational agents have been proposed. These include agents sometimes known colloquially as "chatbots". In the past, these systems used hand-crafted rules to parse user messages and provide a response. For example, a user query such as "Where is the power button on device X?" may be parsed by looking for string matches for the set of terms "where", "power button" and "device X" in a look-up table, and replying with a retrieved answer from the table, e.g. "On the base". However, these systems are somewhat limited; for example, the user message "I am looking for the on switch for my X" would not return a match and the conversational agent would fail to retrieve an answer.

To improve conversational modelling, a neural conversation model has been proposed to provide a conversational agent, e.g. as in the following document. VINYALS, Oriol and LE, Quoc. A neural conversational model. arXiv preprint arXiv:1506.05869. Submitted 19 June 2015. In this neural conversation model, a sequence-to-sequence framework is used to generate short machine replies to user-submitted text. The model uses a data driven approach, rather than a rule-based approach. While the neural conversation model generates replies that are rated more useful than a comparative rule-based system, the authors admit that their model still has limitations. For example, the conversational agent only gives short and simple answers, which may not always address a user's query. Additionally, the authors found that replies were often inconsistent, e.g. if semantically similar user queries with differing text data were submitted, the conversational agent would provide inconsistent (i.e. differing) answers. Neural conversation models such as in the above paper have been found to be difficult to implement as practical user interfaces in the real-world, e.g. due to the aforementioned issues.

Accordingly, there is a desire to improve user-computing interfaces to enable users to submit natural language queries and to provide these interfaces in a practical and implementable manner. By improving user-computing interfaces, it may be possible to efficiently provide responses to a large number of user queries, e.g. which are received concurrently. In particular, there is a desire to build computer systems to implement these user-computing interfaces that allow for improvement and feedback on their operation.

### Summary

Aspects of the present invention are set out in the appended independent claims. Certain variations of the present invention are set out in the appended dependent claims.

Further features and advantages of the invention will become apparent from the following description of preferred embodiments of the invention, given by way of example only, which is made with reference to the accompanying drawings.

### Brief Description of the Drawings

Figure 1A shows a system for implementing a conversational agent according to an example.
Figure 1B shows a larger example of a client computing device from Figure 1A.
Figure 2 shows an example of text pre-processing that may be applied to one or more messages.
Figure 3 shows an example of a system for providing feedback to a conversational agent.
Figure 4 shows an example response template.
Figures 5A and 5B show schematic screen layouts for displaying data to an operator of a conversational agent according to an example.
Figure 6 shows a method for providing feedback to a conversational agent according to an example.
Figure 7 shows a non-transitory computer readable medium containing computer program instructions according to an example.

### Detailed Description

Certain examples described herein provide methods and systems for providing feedback to a conversational agent. These examples address some of the issues encountered when practically implementing a conversational agent. For example, they enable an operator to inspect the internal operation of the conversational agent and provide feedback to update the agent. In turn, they enable a natural language interface to be efficiently provided, and for performance to improve over time.

In the description below, the operation and configuration of an example conversational agent will be described. Certain examples described herein may allow for feedback to be provided to a conversational agent of a form similar to that described.

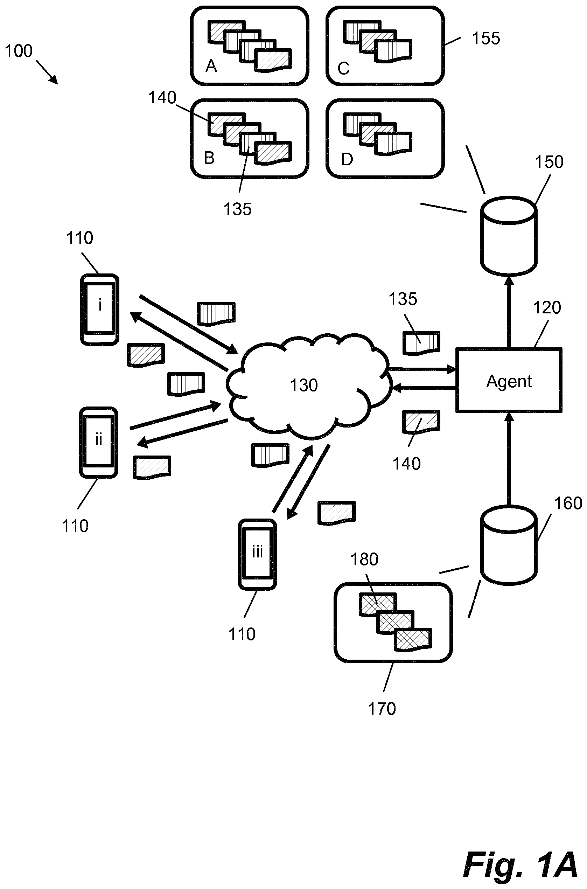

Figure 1A shows a system for implementing a text dialogue using a conversational agent according to an example. Figure 1A is a schematic diagram that shows certain components to explain the operation of a text dialogue system; it should be noted that certain features may be added, omitted or modified while retaining an underlying functionality as described herein.

Figure 1A shows conversations, i.e. text dialogues, which are taking place between three example user computing devices 110 and a conversational agent 120. In the present example, the user computing devices 110 are communicatively coupled to the conversational agent 120 using one or more networks 130. The one or more networks 130 may comprise any form or interconnection of networks, e.g. may comprise a public set of interconnected wide area networks such as the Internet and/or one or more private networks. In other examples, the conversational agent 120 need not be communicatively coupled to a user computing device 110 via a network, e.g. the conversational agent 120 may be implemented as part of the user computing device 110. In practice, there may be multiple conversation agents 120, wherein each conversation agent 120 may communicate with a large number of user computing devices 110 (e.g. on a ratio of 1:100+).

The user computing devices 110 may comprise a variety of computing devices including, but not limited to, mobile devices (e.g. smartphones, tablets), embedded devices (e.g. so-called "smart" appliances, or microphone and speaker devices for use with intelligent personal assistants), desktop computers and laptops, and/or server devices. These computing devices comprise at least a processor and memory, wherein computer program code may be stored in the memory and implemented using the at least one processor to provide described functionality. The user computing devices 110 may comprise a network interface to couple to the one or more networks 130. This network interface may be a wired and/or wireless interface.

The conversational agent 120 may be implemented upon a server computing device comprising at least one processor and memory. In examples described herein, the functionality of the conversational agent 120 may be implemented, at least in part, by at least one processor and memory, wherein computer program code is stored in the memory and executed upon the at least one processor. Certain aspects of the conversational agent 120 may also be implemented in programmable integrated circuits. The server computing device may also comprise a wired and/or wireless network interface to couple to the one or more networks 130.

In Figure 1A, messages are exchanged between the user computing devices 110 and the conversational agent 120 over the one or more networks 130. These messages comprise messages sent from a user computing device 110 to the conversational agent 120, shown as user messages 135 in Figure 1A, and messages sent from the conversational agent 120 to a user computing device 110, shown as agent messages 140 in Figure 1A. User messages 135 may comprise queries from a user and agent messages 140 may comprise replies or responses to those queries. There need not be a one-to-one query-response pattern to the messages, for example, a conversational agent 120 may send a first message to begin a text dialogue, to which a user may reply with one or more user messages detailing their query, and further to which the conversational agent 120 replies with one or more agent messages. A text dialogue may comprise multiple exchanges of messages backwards and forwards between the user computing device 110 and the conversational agent. For example, a text dialogue may comprise 5-20 messages or more.

Messages may be exchanged over a plurality of differing protocols and mechanisms. Text dialogues may have a single mode (e.g. be based around a single protocol or mechanism) or be multi-modal (e.g. where messages are collated from multiple differing message exchange mechanisms). Example protocols and mechanisms include, amongst others, email, Short-Message Service (SMS) messages, instant messaging systems, web-conferencing, Session Initiation Protocol (SIP) services, Text over Internet Protocol (ToIP) systems, and/or web-based applications (e.g. Hyper Text Markup Language - HTML - data transmission via Hypertext Transfer Protocol - HTTP). Certain messaging systems may be based in the application layer and operate over, for example, transport control protocol (TCP) over Internet Protocol (IP). Messages may be stored and/or managed as part of a Customer Relationship Management (CRM) platform. Text dialogues are typically one-to-one but in certain examples may comprise messages originating from multiple conversational agents and/or users. Text dialogues may be live, e.g. comprise messages exchanged in real-time or near real-time, or may exist over a period of time (e.g. days, weeks or months). Users may be identified via user identifiers such as email addresses, usernames for login credentials, phone numbers and/or Internet Protocol address. A start of a text dialogue may be indicated by a first message exchanged over a given protocol or mechanism, a user or agent initiating a messaging session, and/or a protocol request to start a conversation. An end of a text dialogue may be marked by a period of inactivity, be closed by a user or agent action and/or be set by the closing of a message exchange session, amongst others.

Although a single conversational agent 120 is shown in Figure 1A, example systems for implementing a text dialogue may comprise multiple agents, wherein each conversational agent 120 is active in one or more text dialogues at any one time. For example, multiple conversational agents 120 may be implemented as multiple threads on at least one processor of a server computing device.

Returning to the example of Figure 1A, the conversational agent 120 is communicatively coupled to a dialogue database 150. The dialogue database 150 comprises historical data representing a plurality of text dialogues 155. Each text dialogue comprises a sequence of messages 135, 140 that have been exchanged between a user and a conversational agent. In a multi-agent system, e.g. where multiple conversational agents are communicating with user computing devices, the plurality of text dialogues 155 may comprise text dialogues involving different conversational agents, wherein each conversational agent may have one or more associated text dialogues. As an example, four text dialogues 155 are shown in Figure 1A: text dialogue A comprises four messages, a first message from an agent to a user, two messages from the user to the agent, and a fourth message from the agent to the user; text dialogue B starts with two messages from an agent, which is followed by a message from a user, and ends with a response message from the agent; and text dialogues C and D start and end with a message from a user, wherein an agent response follows the start message. These are simple examples and actual datasets may comprise different combinations of user and agent messages, as well as different numbers of messages. An implementation of this example may have a dialogue database 150 with thousands or millions of text dialogues.

In the example of Figure 1A, each message comprises text data. Text data may comprise a sequence of encoded characters that are stored in memory as a byte sequence. Text data may be encoded using one or more standards, e.g. an American Standard Code for Information Interchange (ASCII) or a Unicode encoding (such as UTF-8 or UTF-16). Text data may be stored in plain text format or a structured text format. If text data is stored in a structured text format, raw text data representing messaging text within formatting or markup may be extracted using one or more pre-processing functions. Text dialogues 155 may be stored as files (e.g. formats include plaintext ".txt", JavaScript Object Notation ".json", or extended markup language ".xml") and/or as a series of database rows. In the former case, the dialogue database 150 may comprise one or more storage devices that store one or more files. The dialogue database 150 may comprise an interface that returns text data following a request for a given text dialogue. The text data may be representative of utterances ranging from a single word (e.g. a character sequence) or short sequence of words (e.g. a sentence) to a paragraph or more of text (e.g. one or more groupings of word sequences).

Figure 1A also shows a template database 160 that is communicatively coupled to the conversational agent 120. The template database 160 comprises a response template set 170, i.e. a collection of response templates 180 for use by the conversational agent 120. For example, in Figure 1A, the conversational agent 120 may be configured to retrieve one or more response templates 180 from the response template set 170. In one case, the conversational agent 120 may retrieve the response template set 170 as a list of possible responses to use to respond to a received user message 135. A list of response templates may be provided with probability values indicating a confidence in their applicability. In certain case, the conversational agent 120 may select one of the response template set 170 based on a message history for a current text dialogue that requires a response. The conversational agent 120 may use a response template "as is" to provide a response message 140, or may modify the response template 140 to provide the response message 140. In certain cases, a response message 140 may be modified by populating field values that are extracted from message history for a current text dialogue (e.g. a string representing a name of a user may be extracted and inserted into a response template).

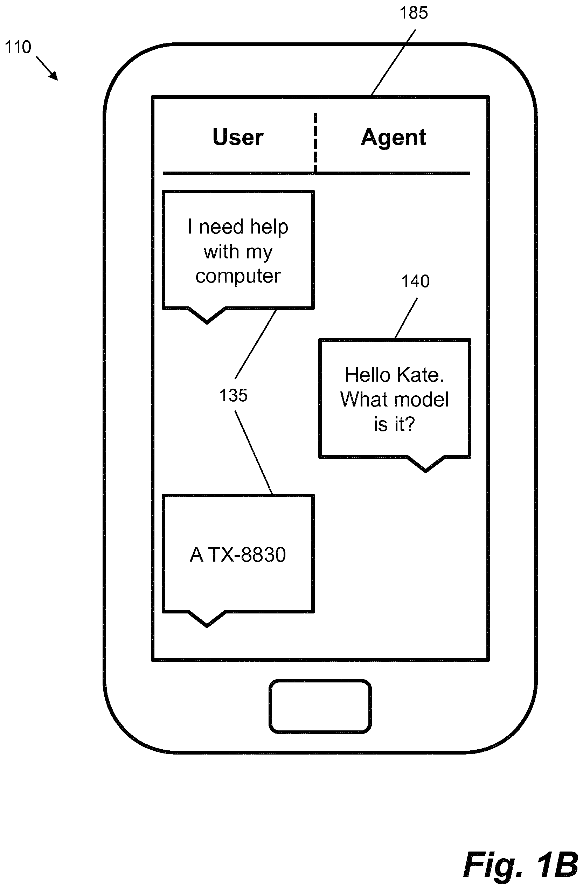

Figure 1B shows an example of how a text dialogue may appear when rendered on a user computing device 110 (in this Figure a smartphone). A user interface 185 displayed on a screen of the user computing device 110 shows messages sent by the user 135 (possibly using the computing device 110) and a response message 140 sent by the conversational agent 120.

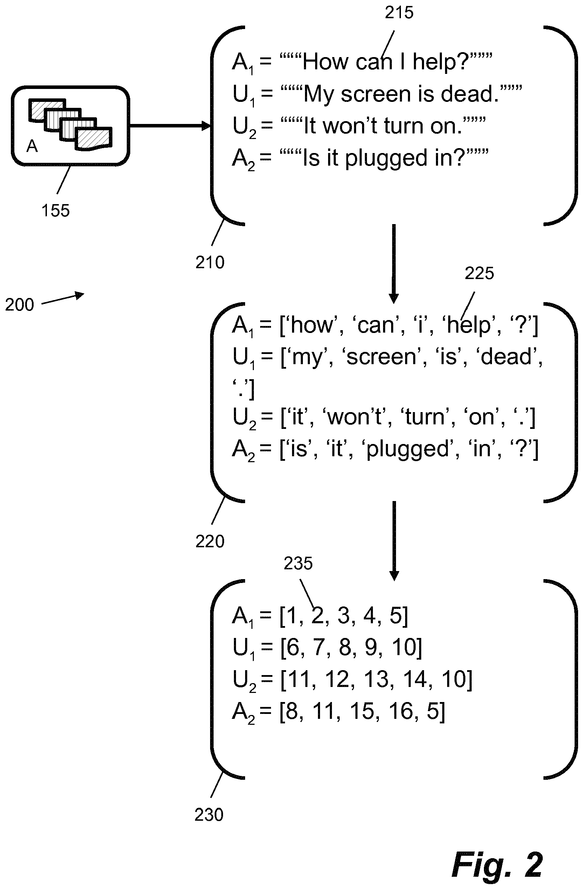

Figure 2 shows examples of how a text dialogue 155 may be stored and pre-processed. Figure 2 shows an example of text dialogue A from Figure 1A, which consists of four messages, a first message from an agent to a user, two messages from the user to the agent, and a fourth message from the agent to the user. In this example, the text dialogue 155 is stored on disk as a sequence of strings 210. An order for the sequence of strings 210 may be explicitly indicated (as shown by the variable names Aᵢ and Uᵢ indicating an i^{th} utterance by the Agent or the User) and/or may be implicit, e.g. set by the order of strings in a list or array. In examples other than that shown in Figure 2, sequential messages from a common party, e.g. U₁ and U₂ in Figure 2, may be combined (e.g. concatenated) into a single string. Each string 215 in the sequence of strings 210 may comprise a series of encoded characters. In general, a text dialogue comprises a sequence of text data, where the text data originates from one of a plurality of data sources. In one case, messages may be grouped into pairs of messages representing a query (e.g. from a user) and a response (e.g. from an agent). The text dialogue may then be represented as a sequence of these pairs. In this case, opening messages such as A₁ may be omitted from subsequent processing.

In certain examples, each text string 215 may be pre-processed. One method of pre-processing is text tokenization. Text tokenization splits a continuous sequence of characters into one or more discrete sets of characters, e.g. where each character is represented by a character encoding. The discrete sets of characters may correspond to words or word components in a language. Each discrete set may be referred to as a "term" or "token". A token may be deemed a "word" in certain cases if it matches an entry in a predefined dictionary. In certain cases, tokens need not always match agreed words in a language, for example "New York" may be considered one token, as may "gr8" or "don't". One text tokenization method comprises splitting a text string at the location of a white space character, such as " ". Figure 2 shows an example result of text tokenization performed on the sequence of strings 210 in the form of character set arrays 220. For example, character set array 225 - ['how', 'can', 'i', 'help', '?'] - is generated by tokenizing string 215 - "How can I help?". Each character set array may be of a different length. In certain cases, a maximum array length may be set, e.g. as 50 or 100 tokens. In these cases, entries in the array that follow the end of a message may be padded with a special token (e.g. <PAD>).

There are several possible text tokenization implementations, some of which may produce an output that differs from the example of Figure 2; any of these possible text tokenization implementations may be used with the methods described herein. Other text pre-processing includes converting characters to a single case (e.g. all lowercase), removing certain punctuation or non-printing characters, and/or converting each term to a lemma (a normalized or dictionary form of the term, e.g. "is" may be converted to "be").

In certain examples, text tokens may be converted into a numeric form. For example, a dictionary may be generated that comprises a list or array of all discrete sets of characters that are present following text tokenization of one or more messages, e.g. as received by the conversational agent 120 or retrieved from the dialogue database 150. In this case, within the data or for a copy of the data, each unique set of characters, i.e. each token, may be replaced with a numeric value representing an index in the dictionary. In Figure 2, the character set arrays 220 are converted into variable length numeric arrays 230. In this example, the dictionary has entries: {..., "?": 5, ..., "is": 8, ..., ".":10, ...}. Numeric array 235 is generated from character set array 225 as [1, 2, 3, 4, 5]. Each value in the numeric array may be an integer. In certain cases, a threshold may be applied to a token count metric to set the size of the dictionary; e.g. a vocabulary may be limited to 10,000-50,000 tokens, in which case the most common 10,000-50,000 terms may be included in the dictionary and any token that is not in the dictionary is replaced with an out-of-dictionary symbol (e.g. <UNK>). In certain cases, integer values may be converted into a one-hot binary encoding, e.g. an array of binary values equal to the size of the dictionary - where an integer value of "8" is represented by setting the eighth entry in the array to "1" and all other entries to "0". These numeric arrays may also be padded, e.g. if required for subsequent processing.

In the system 100 shown in Figure 1A, the conversational agent 120 may apply a predictive model to text data extracted from one or more received messages in a current text dialogue to determine which response template to select. The predictive model may be trained using paired user messages and response templates derived from the dialogue database 150. For example, for training, text data representative of one or more messages containing a user query may be associated with an identifier of a response template, such as in a tuple or other similar data structure. Each response template may have a different identifier. An association between a response template and text data may be based on the response template that was selected to respond to the user query (e.g. in a historical dialogue) or may be based on matching response templates to text data representative of a recorded agent response.

Given text data extracted from received messages as input, this text data may be pre-processed and supplied to a trained version of the predictive model to output (i.e. predict) a set of probability values for a set of response templates in template database 160. This set of response templates may be the set 170 of all response templates or a subset of this set (e.g, based on hierarchical selection methods). A conversational agent 120 may be configured to select the response template associated with the largest probability value output by the trained predictive model and use this response template to respond to the received messages. The probability values may be seen as confidence levels for the selection of a particular response template. Hierarchical groupings are also possible with tiers of response template groups, e.g. a first prediction may generate probabilities for one of eight elements in an array representing eight initial groups, where the element with the largest value (typically selected using an argmax function) may indicate a first predicted group, then a second prediction of a group or response template within the first predicted group may be made.

In the examples discussed herein, a "predictive model" may comprise a selection and specific coupling of interconnected functions, where each function has a set of parameter values. A function may define a geometric operation that is applied by way of matrix multiplication, e.g. on a graphics processing unit (GPU) or central processing unit (CPU), and and/or vector addition. A "predictive model" may have a variety of different architectures depending on the implementation. Functions may be defined in libraries of computer program code, wherein, in use for training and prediction, the computer program code is executed by at least one processor of a computing device. Predictive models may be based, amongst others, on feed forward neural networks, convolutional neural networks or recurrent neural networks. Functional units such as embedding layers, softmax layers and non-linear functions may also be used. Predictive models may be based on differentiable computing approaches that use back-propagation to train the model.

When using predictive models, there is a problem that the operation of the model is often opaque to an operator. For example, many predictive models are implemented as "black boxes" that are configured through training to turn input data into output data. Practical predictive models used in production environments may have millions, hundreds of millions or billions of parameters. Training may comprise using millions of training examples. This is especially the case for modern multi-layer neural networks. With these models, there is no mechanism to present the working of the model to the operator, e.g. to indicate "why" one class label has a higher probability than another class label. There is also no way for the operator to modify the working of the model if the predicted probability values differ from test data values.

Certain examples described herein allow feedback to be exchanged between a conversational agent and an operator (so-called "bi-directional" feedback). Certain examples allow an incorrect response template to be indicated by the operator and the conversational agent to compute a contribution for tokens representative of how influential the tokens were in the prediction of the incorrect response template by an applied predictive model. The computed contribution is used to provide further feedback to the operator comprising potential tokens to disassociate with the incorrect response template. The operator then selects the tokens they wish to disassociate and the parameters of the predictive model are adjusted based on this feedback. By repeating this process, an accuracy of a conversational agent, in the form of the response templates that are selectable for a text dialogue, may be improved.

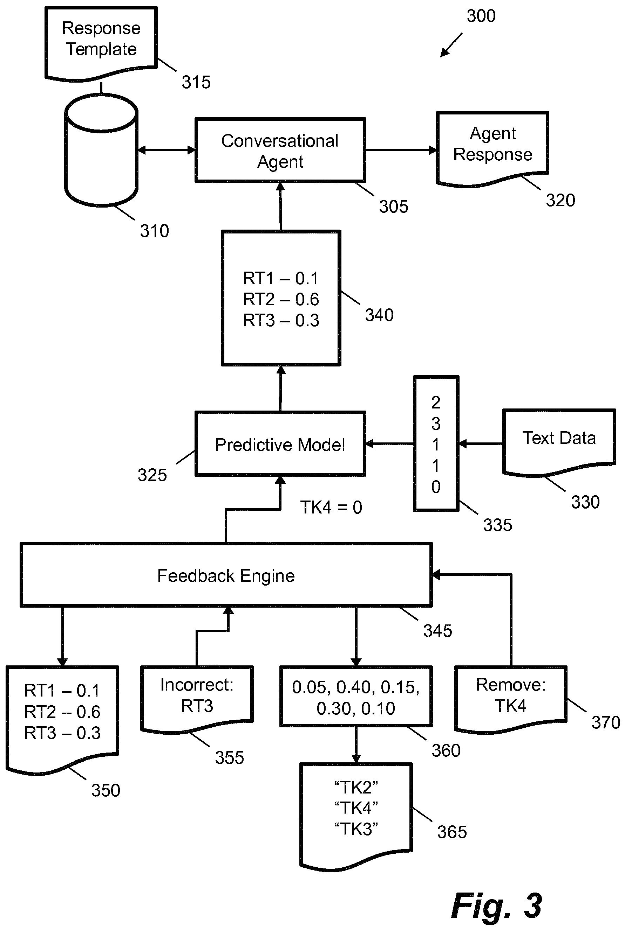

Figure 3 shows a system 300 for providing feedback to a conversational agent. The system 300 comprises a conversational agent 305, which may be the conversational agent 120 from Figure 1. The conversational agent 305 comprises at least a processor and a memory. As described with reference to Figure 1, it is configured to receive one or more user messages from a client device, such as over a network. The conversational agent 305 in Figure 3 is coupled to a template database 310. The template database 310 may comprise an implementation of the template database 160 from Figure 1. The template database 310 stores a plurality of response templates 315 for selection by the conversational agent 305 to send an agent response 320. The agent response 320 comprises one or more messages that may be sent in response to the one or more user messages from the client device (e.g. shown as 140 in Figure 1).

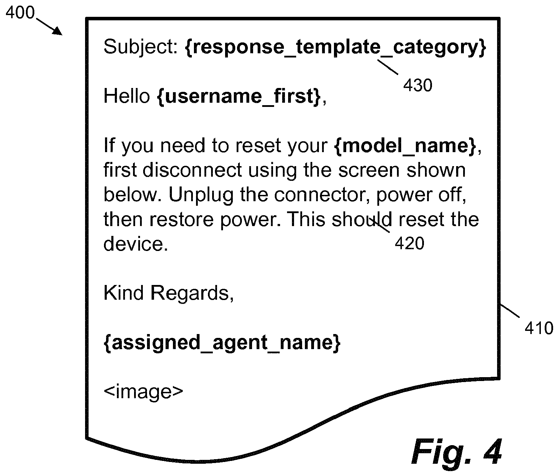

An example 400 of a response template 410 is shown in Figure 4. Figure 4 shows a response template that may be used for email communication. The response template 410 comprises text data 420 and field data 430. Field data 430 may be populated by the conversational agent 305 during operation to generate agent response 320. Similar templates may be provided for other communication protocols, such as SMS, instant messaging and voice calls (e.g. using text-to-speech synthesis).

Figure 3 also shows a predictive model 325. The predictive model 325 operates on text data 330 that is representative of one or more messages received from a user. This text data 330 may be loaded as part of an active text dialogue, or be loaded from a data source of text dialogues that occurred in the past (e.g. from dialogue database 150). The predictive model 325 is configured to receive a numeric array 335 that is generated from the text data 330. The numeric array 335 may be generated by the predictive model 325, e.g. as part of an in-built pre-processing operation, or may be generated by a separate pre-processing entity (e.g. the conversational agent 305 may convert and store text data 330 as the numeric array 335, e.g. in dialogue database 150). Different pre-processing pipelines are possible depending on the implementation. In the example of Figure 3, the numeric array 335 comprises an array with a plurality of elements (five are shown for example in Figure 3), where each element in the numeric array 335 is associated with one of a predefined set of tokens. As described above, each token comprises a sequence of character encodings and may be understood as roughly equivalent as a word. The predefined set of tokens may comprise a set vocabulary as also described above. The predefined set of tokens may be selected based on the *N* most common character sequences (when split based on a space token or the like), where *N* may be between 1000 and a million. *N* is often referred to as the size of the vocabulary. The predefined set of tokens may be generated by processing historical data, such as past messages in the dialogue database 150.

If the predictive model 325 comprises a recurrent neural network then the numeric array 335 may comprise an array similar to array 235 in Figure 2, wherein the array corresponds to a sequence of tokens in the text data 330. The numeric array 335 may be ordered or unordered. In certain cases, stopwords (e.g. the *M* most frequent words across a corpus such as dialogue database 150) may be removed. Other pre-processing may also be performed such as converting to lowercase, stemming, named entity detection and/or converting integer values to word embeddings. In a named entity detection case, detected named entities may be replaced with standardized tokens. If the predictive model 325 comprises a feed forward neural network or a linear model, then the numeric array 335 may comprise a token frequency array, wherein each element may be identified by an index position in the array (e.g. "the" may be element "10"). In certain cases, a hash table or dictionary data structure may be used to map index integers to character sequences (e.g. as described with reference to Figure 2), whether for the numeric array 335 itself or as a pre-processing step to generate a sequence of index integers. For certain predictive models 325, e.g. linear and feed forward neural network models, the numeric array 335 may comprise values representative of one of a token count for tokens within the predefined set of tokens; and a term-frequency document-inverse-frequency count for tokens within the predefined set of tokens. In the former case, the value of each element may represent a tally or count for a particular character sequence with respect to the text data 330. For example, text data in the form of the string "My screen is dead. The screen button is not working." may be converted into a token frequency array [1, 2, 2, 1, 1, 1, 1] where the elements of the array map to the following tokens: {0: 'my', 1: 'screen', 2: 'is', 3: 'dead', 4: 'button', 5: 'not', 6: 'working'}.

The predictive model 325 is configured to output an array of probabilities 340. Each element in the array comprises a probability value (e.g. a real value between 0 and 1) that is associated with a particular response template 315 from the template database 310. As a simple example, there may be three response templates: ["How to reset device", "How to turn on screen", "How to use device"], and so in this case the predictive model 325 would output an array of three elements, e.g. [0.1, 0.6, 0.3] representing a probability of each respective template being appropriate (e.g. here "How to turn on screen" has a confidence of 60% and may be selected as the most likely response template to use). As with the numeric array 335, a dictionary or hash table may be provided to map between an index of an element in the array and a response template (e.g. a path of response template data or a database record identifier). In use, e.g. when implementing the dialogue system 100 of Figure 1, the conversational agent 305 may use the array of probabilities 340 to select a response template 315 from the template database 310 to generate the agent response 320. In more complex examples, there may be tens or hundreds of response templates, and as such the array of probabilities may be larger than that shown in this simple example. In one case, each element in the array of probabilities 340 may be associated with a response template in a selected subset of the template database 310; in another case, each element in the array of probabilities 340 may be associated with a response template from the full set of response templates in the template database 310.

The predictive model 325 is trained on a set of training data to determine a mapping between the numeric array 335 and the array of probabilities 340. The result of training is a trained predictive model comprising data indicative of stored values for a plurality of model parameters. These model parameters are used to implement the geometric transformations that convert numeric values in the numeric array 335 to the probability values in the array of probabilities 340. As discussed above, the trained predictive model 325 may comprise computer program code to implement the model on a processor of a computing device and the data indicative of stored values for a plurality of model parameters. In practice an untrained predictive model may be constructed by assembling computer program code, e.g. from machine learning libraries in programming languages such as Python, Java, Lua or C++. The predictive model may be applied to training data by executing this computer program code on one or more processors, such as groups of CPUs or GPUs. Following training, a trained predictive model may comprise computer program code as executed by a processor and a set of stored parameter values that parameterize (i.e. result in) a specific model configuration.

Figure 3 also shows a feedback engine 345. The feedback engine 345 comprises at least a processor and a memory, i.e. where computer program code is loaded from the memory and executed on the processor. The computer program code may be stored on a non-volatile machine-readable medium, such as a hard disk or solid-state drive. The feedback engine 345 generates data for display to an operator and receives data indicative of feedback from the operator. The feedback engine 345 uses the data indicative of feedback from the operator to adjust the parameters of the predictive model 325 to improve performance.

In particular, the feedback engine 345 is first configured to apply the trained predictive model 325 to the numeric array 335 to generate the array of probabilities 340. For example, the feedback engine 345 may operate on a batch of historical text dialogues from the dialogue database 150 of Figure 1. In this case, the feedback engine 345 may be repeatedly applied to different sets of text data 330 (i.e. a batch) representative of different user messages. Alternatively, the feedback engine 345 may be applied in real-time (or near real time) as the conversational agent 305 generates responses to a live user.

In the example of Figure 3, for a given set of text data 330, the feedback engine 345 accesses the array of probabilities 340 and sends this as data 350 to an operator of the conversational agent 305 for display. In another case, the feedback engine 345 may not access and send this data itself, but may rely on another entity, such as the conversational agent 305 to do this. The feedback engine 345 may filter the array of probabilities 340 to generate data 350. In this case, the feedback agent 345 may select the response templates that have the k largest probability values in the array of probabilities 340. For example, this may comprise sending data based on the top three or five probability values in the array of probabilities 340.

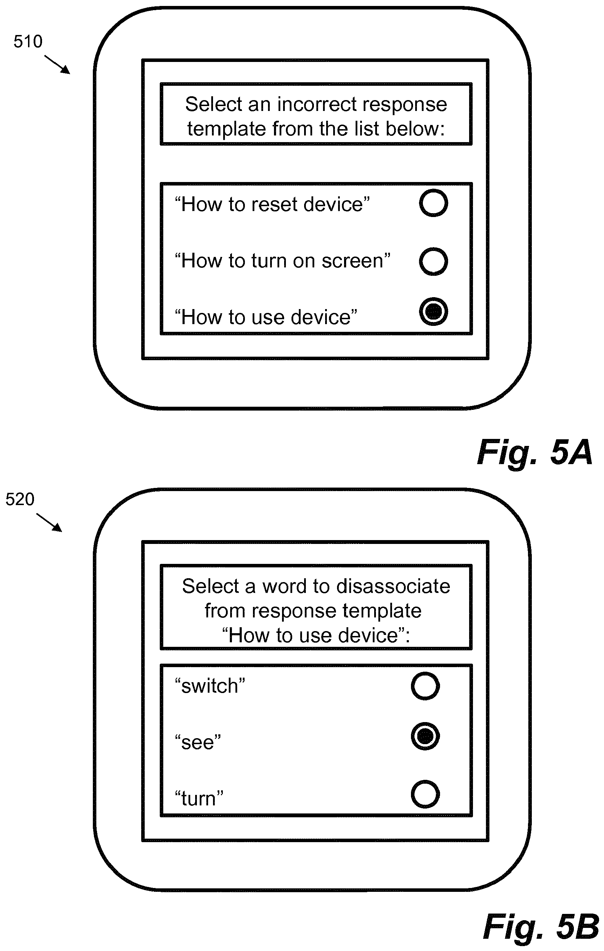

The data 350 is displayed to the operator, e.g. via a monitor or other screen. A front-end client process may be arranged to receive the data and present it for display (e.g. operating on a client device of the operator). An example of a user interface 510 to display this data is shown in Figure 5A. The operator may use the user interface 510 to indicate an incorrect response template. The user interface may comprise a web page or interface for an application. An incorrect response template is a response template that should not be associated with the original input text data 330, e.g. that relates to a different unrelated category or class or that is not appropriate for using to response to the user message associated with the text data 330. In the example of Figure 3 and Figure 5A, "How to use device" is deemed to be an incorrect response template that is not related to text data 330 even though it had the second highest probability value of 30%.

The feedback from the operator is received by the feedback engine 345 as data 355. Data 355 may be processed on a client device used by the operator and sent to the feedback engine 355 across a network. Data 355 in Figure 3 shows that the third response template ("How to use device") is provided as the indication of an incorrect response template that is to be disassociated with the text data 330. Data 355 may be provided in the form of a response template identifier.

Following receipt of an indication of an incorrect response template, feedback engine 345 is configured to compute a contribution 360 of elements in the numeric array 335 to an output of the trained predictive model 325 for the incorrect response template. This may comprise identifying parameters of the predictive model 325 that are associated with the incorrect response template. These may be weights that contribute to the output in the array of probabilities 340 that corresponds to the incorrect response template (e.g. weights that contribute to the value of the third element - RT3 - as shown in Figure 3). It may comprise computing a value of the contribution for at least a subset of tokens in the predefined set of tokens. In certain cases, a value of the contribution may be computed for each token in the predefined set of tokens. This may be seen as computing a value that indicates how each "word" in the text data 330 influences the probability value associated with the incorrect response template. In Figure 3, the contribution 360 comprises an array of values (e.g. real values stored as a float data type) for each element in the numeric array 335. The contribution 360 may be processed to select a set of tokens 365 to send to the operator. This may comprise selecting tokens associated with a contribution greater than a predefined threshold, or selecting those tokens that are associated with the *k* largest computed contribution values. This latter approach is shown in Figure 3, wherein the set of tokens 365 comprise the second, fourth and third tokens ("TK2", "TK4", "TK3") that respectively have the top three contribution values (0.4, 0.3 and 0.15). In certain cases, the contribution values may be sent to the operator together with the tokens; in other cases only the tokens may be sent.

The set of tokens 365 are sent to the operator to allow the operate to select one or more tokens that are to be disassociated with the incorrect response template (e.g. the response template selected by the operator as indicated in data 355). A client device operated by the operator may receive the set of tokens 365 and display them for selection, e.g. in a similar manner to the set of response templates. In certain cases, the contributions may also be displayed. In certain cases, the set of tokens 365 may be ordered based on their contributions. An example user interface 520 for selecting a token is shown in Figure 5B. Any appropriate user interface components may be used to allow the operator to select one or more tokens to disassociate a token with the incorrect response template, such as radio buttons or dropdown lists. The feedback from the operator is received by the feedback engine 345 as data 370. In the example shown in Figure 3, the operator has indicated that the fourth token ("TK4" - shown as "see" in Figure 5B) is to be disassociated from the third response template ("How to use device"). Again, the data 370 may comprise the token itself or an identifier for the token such as an index in the numeric array 335. Disassociation comprises reducing an influence of the token on classification of the text data 330 as relating to the third response template.

In Figure 3, the feedback engine 345 is configured to adjust the data indicative of the stored values of the trained predictive model to reduce the contribution of the indicated tokens. In the Figure, this is indicated as setting a parameter value associated with the contribution of the fourth token ("TK4") to the incorrect response template to zero. In this manner, by setting the value to zero, the fourth token no longer contributes to the text data 330 being classified as the third response template. This improves the accuracy of the predictive model 325. In other cases, the parameter value may not be set to 0 but may be reduced by a predefined amount. In certain cases, the operator may provide a value (such as a percentage) indicating how much the contribution is to be reduced by. In this case, the parameter value associated with the contribution of the indicated token may be reduced by the indicated percentage. In certain examples, this process may be repeated for multiple tokens (e.g. a plurality of tokens from the data 365).

The example system 300 shown in Figure 3 enables an operator to inspect how a conversational agent uses a trained predictive model to select a response template, and to correct erroneous template associations based on indicated tokens (so-called "trigger" tokens).

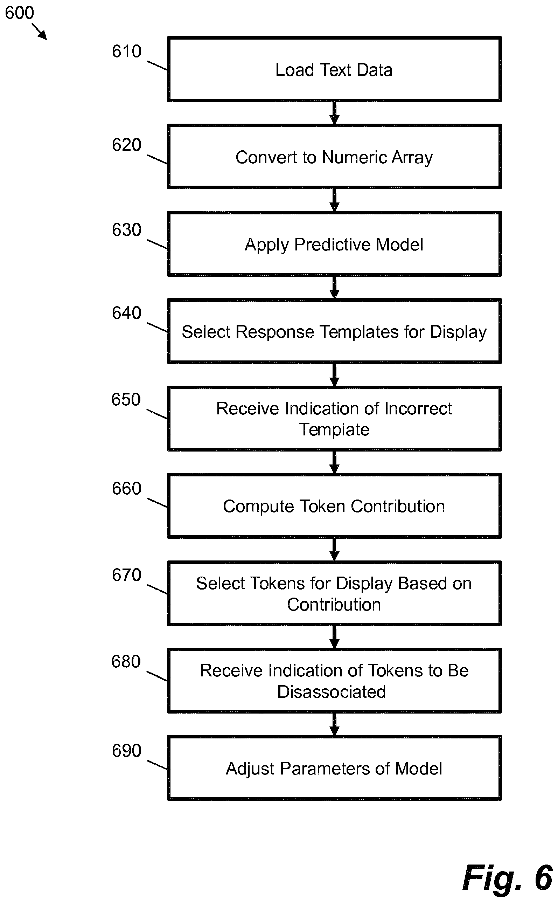

Figure 6 shows a computer-implemented method 600 for providing feedback to a conversational agent. The method may be used in association with the system 300 of Figure 3 or in association with a different system. Aspects of the operation of the system 300 may apply to operations of the method.

At block 610, text data representative of one or more messages received from a user is loaded. This text data may be loaded from a live conversation or dialogue database 150. At block 620, the text data is converted to a numeric array, e.g. as described in detail above. At block 630, a trained predictive model is applied to the numeric array to generate an array of probabilities, wherein a probability in the array of probabilities is associated with a response template for use in responding to the one or more messages. At block 640, a list of response templates ordered based on the array of probabilities is generated for display to an operator of the conversational agent. At block 650, data indicating an incorrect response template that is to be disassociated with the one or messages is received from the operator. At block 660, a contribution of elements in the numeric array to an output of the trained predictive model is computed for the incorrect response template. At block 670, at least a subset of tokens from the predefined set of tokens is generated based on the computed contribution. These tokens are for display to the operator of the conversational agent. At block 680, data indicating one or more of the displayed tokens that are to be disassociated with the incorrect response template are received from the operator of the conversational agent. At block 690, parameters of the trained predictive model are adjusted to reduce the contribution of the indicated tokens for the incorrect response template.

In certain implementations of the system 300 and method 600, the trained predictive model comprises a multiclass linear model that is trained upon pairs of associated text data and response templates. In this case, it is assumed that each set of text data has one associated response template. Each response template may be associated with an index in an output array. The multiclass linear model takes the numeric array as input and is trained to determine a linear mapping to class logits, representing unnormalized log-probabilities associated with respective ones of a set of potential response templates. The multiclass linear model may be trained with "one-hot" encodings of response templates, e.g. in an array corresponding to the array of probabilities the entry associated with the response template assigned to the text data is set to "1" and all other entries are set to "0". The unnormalized log-probabilities may be normalized using a softmax function. The output of the softmax function comprises an array of probabilities, such as array 340 in Figure 3. The model is "multiclass" as an output is generated that indicates probabilities for a plurality of different response templates (which form the "classes" predicted by the model). The linear model may apply a matrix of weight values to the numeric array and add a bias vector. The matrix of weight values has a number of rows equal to the number of available response templates and a number of columns equal to the number of elements in the numeric array. The bias vector has a length equal to the number of available response templates. The model is linear as only multiplications and additions are applied to the elements of the numeric array.

In the above case of a multiclass linear model implementing the trained predictive model, a contribution of a given element in the numeric array, corresponding to a given token, may be determined by computing logit-contributions for the response template indicated as "incorrect". In this case, weights of the trained predictive model that are associated with the incorrect response template are obtained. This may comprise extracting a row of weights from the aforementioned matrix of weight values that are associated with the incorrect response template. For a given element in the numeric array, a contribution of the corresponding token may be computed as a ratio of a contribution from a weight from the row of weights associated with the given element and a contribution of the row of weights applied to all the elements of the numeric array. Or in other words, a contribution of a particular token-index to predicting a particular response template is proportional to the value of a token-specific parameter and a score for the particular response template. In this case, salient or "trigger" tokens are those which increase a logit-weight of the predicted incorrect response template. In this case, adjusting parameters of the trained predictive model, e.g. at block 690 of Figure 6, may comprise reducing (or setting to 0) a weight value in the array of weights associated with the selected token (e.g. in a row associated with the incorrect response template index, set the value of the *w*th column to 0, where token w is the selected token).

In certain implementations of the system 300 and method 600, the trained predictive model comprises a multi-layer (a so-called "deep") neural network that is trained upon pairs of associated text data and response templates. In this case, computing a contribution of elements may comprise using values of back-propagated partial derivatives of a loss computed during training of the trained predictive model. A loss (also referred to as an error) of a predictive model may be computed by a loss function, which takes as input the array of probabilities output by the predictive model and a "ground truth" array, which may be a "one-hot" encoded array of equal size to the array of probabilities where the "correct" response template has a value of 1 and all over elements are set to 0 (representing a point-mass probability distribution). For example, if cross-entropy is used as a loss function for the predictive model, then a partial derivative of the numeric array with respect to the loss may be computed as both the model and the loss function are differentiable. The loss of the model may be computed by seeing how an indicated "ground truth" or proposed response template (which may be the "incorrect" response template) compares to the corresponding element in the output array of probabilities. The cross-entropy may be computed for the incorrect response template. The partial derivative is an array of the same dimension as the numeric array, and as such an element in this partial derivative corresponds to a particular element of the numeric array, i.e. a particular token in the predefined set of tokens. A large positive value in the partial derivative array indicates that increasing the value of the corresponding element in the numeric array increases the loss, i.e. decreases the predictive model's belief that the element is associated with the incorrect response template. Correspondingly, a large negative value in the partial derivative array indicates that increasing the value of the corresponding element in the numeric array decreases the loss, i.e. increases the predictive model's belief that the element is associated with the incorrect response template. Hence, a logit-contribution for a multi-layer neural network may be computed as a ratio of a contribution from the partial derivative associated with a given element (and the incorrect response template) and a sum of the partial derivatives for all elements of the numeric array (assuming the incorrect response template). In other words, for tokens that occur in the numeric array, their contribution to predicting a particular response template is proportional to the negative partial derivative of the numeric array with respect to a loss of predicting that template.

When using a multi-layer neural network, or other trained model, the feedback engine 345 and the method 600 may further comprise a mechanism to update the training data for the predictive model based on the indicated tokens to disassociate these tokens with the incorrect response template. In this case, the training data may be updated with text data that includes the indicated tokens, wherein the text data is paired with the incorrect response template. The predictive model may be updated, e.g. at block 690, by re-training the predictive model using the updated training data. "Re-training" here covers further training of an existing model with the additional data as well as training a new model with initial (non-trained) parameter values. The revised text data may be supplied by the operator or another party. The method 600 may comprise requesting text data comprising the indicated tokens and an indication of a correct response template, receiving the text data and the indication of the correct response template, and adding the text data and the indication of the correct response template to training data for the trained predictive model. This may comprise requesting, from the operator, example user messages that comprise the indicated tokens and using this as text data to be associated with the incorrect response template. The incorrect response template for the original text data is thus here deemed to be a "correct" response template for the newly generated text data that includes the indicated tokens.

In certain implementations of the system 300 and method 600, the trained predictive model comprises a recurrent neural network that is trained upon pairs of associated text data and response templates. This may have one or more layers. It may be implemented using Long Short-Term Memory (LSTM) units or Gated Recurrent Units (GRUs), e.g. as implemented in machine learning libraries of computer program code or dedicate integrated circuits. In this case, a contribution for each token may be computed by determining how probability values in the array of probabilities change when the token (e.g. in the form of an integer index or word embedding) is excluded from the numeric array (i.e. the input sequence). In this case, similar to the case of the multi-layer neural network described above, pairings of new numeric arrays containing the indicated tokens to be disassociated and an indicator of the "incorrect" response template may be generated as further training examples and the predictive model re-trained.

In one case, the method 600 may be performed interactively when engaging in conversions with users. In this case, the conversational agent 305 may use a selected "correct" response template, which may be the response template with the largest probability value in the array of probabilities 340, to retrieve that template from the template database 310 and to populate the indicated response template with user data to generate an agent response 320. This may comprise inserting user and/or case specific details as field data 430 as shown in Figure 4. The agent response 320 may then be sent to the user that submitted text data 330, e.g. as message 140 in Figure 1.

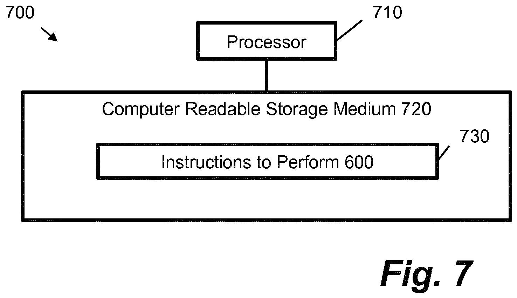

Figure 7 shows an example 700 of a processor 710 coupled to a non-transitory computer storage medium 720. The non-transient computer readable medium 720 contains computer program instructions 730 to cause the processor 710 to perform a number of operations. These operations may comprise instructions to perform the method 600 of Figure 6 or any other functionality described herein. The machine-readable storage medium may be any electronic, magnetic, optical, or other physical storage device that contains or stores executable instructions 720. Thus, the machine-readable storage medium may comprise, for example, various Random Access Memory (RAM), Read Only Memory (ROM), flash memory, and combinations thereof. For example, the machine-readable medium may include a Non-Volatile Random Access Memory (NVRAM), an Electrically Erasable Programmable Read-Only Memory (EEPROM), a storage drive, a NAND flash memory, and the like. Further, the machine-readable storage medium is computer-readable and non-transitory. The processor may include at least one central processing unit (CPU), at least one semiconductor-based microprocessor, other hardware devices or processing elements suitable to retrieve and execute instructions stored in memory, or combinations thereof. The processor can include single or multiple cores on a chip, multiple cores across multiple chips, multiple cores across multiple devices, or combinations thereat. The processor may fetch, decode, and execute instructions from memory to perform various functions. As an alternative or in addition to retrieving and executing instructions, the processor may include at least one integrated circuit (IC), other control logic, other electronic circuits, or combinations thereof that include a number of electronic components for performing various tasks or functions.

Certain examples described herein address an issue of providing feedback to a conversational agent that uses a trained predictive model to select data to respond to users. Through the described example processes, the conversational agent may be considered to partly "explain" its operation, e.g. why it selected particular response text to reply to a user message. An operator is then able to use this "explanation" to provide feedback to the conversational agent so that it can adjust its predictive model and generate more natural replies. An operator may thus be provided with a high-level appreciation of how the conversational agent is working, and the conversational agent is less like a "black box". In particular, "trigger" tokens that the predictive model uses in selection of a particular response template may be marked and disassociated.

The above examples are to be understood as illustrative of the invention. Further examples are envisaged. Even though conversations are referred to as "text dialogues", it is noted that front-end speech-to-text and text-to-speech may be used to convert sound data from a user into text data, and similarly to convert an agent message into sound data. As such, the examples described herein may be used with voice communication systems, wherein "messages" represent portions of an audio conversation that have been converted to text. It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims.

## Claims

1. A computer-implemented method for providing feedback to a conversational agent, the method comprising:
loading text data representative of one or more messages received from a user;
converting the text data to a numeric array, each element in the numeric array being associated with one of a predefined set of tokens, each token comprising a sequence of character encodings;
applying a trained predictive model to the numeric array to generate an array of probabilities, a probability in the array of probabilities being associated with a response template for use in responding to the one or more messages;
generating, for display to an operator of the conversational agent, a list of response templates ordered based on the array of probabilities;
receiving, from the operator of the conversational agent, data indicating an incorrect response template that is to be disassociated with the one or messages;
computing a contribution of elements in the numeric array to an output of the trained predictive model for the incorrect response template;
generating, for display to the operator of the conversational agent, at least a subset of tokens from the predefined set of tokens based on the computed contribution;
receiving, from the operator of the conversational agent, data indicating one or more of the displayed tokens that are to be disassociated with the incorrect response template; and
adjusting parameters of the trained predictive model to reduce the contribution of the indicated tokens for the incorrect response template.

2. The computer-implemented method of claim 1, wherein the trained predictive model comprises a multiclass linear model that is trained upon pairs of associated text data and response templates.

3. The computer-implemented method of claim 2, wherein computing a contribution of elements comprises:
obtaining weights of the trained predictive model that are associated with the incorrect response template; and
for a given element in the numeric array, computing a contribution of the corresponding token as a ratio of a contribution from a weight from the obtained weights associated with the given element and a contribution of the obtained weights applied to all the elements of the numeric array.

4. The computer-implemented method of claim 1, wherein the trained predictive model comprises one or more of a feed-forward neural network and a recurrent neural network that is trained upon pairs of associated text data and response templates.

5. The computer-implemented method of claim 4, wherein computing a contribution of elements comprises using values of back-propagated partial derivatives of a loss computed during training of the trained predictive model.

6. The computer-implemented method of claim 5, wherein, for a given element in the numeric array, the contribution of the corresponding token comprises a ratio of a contribution from the partial derivative associated with the given element and a sum of the partial derivatives for all elements of the numeric array.

7. The computer-implemented method of claim 1, wherein generating a list of response templates for display comprises displaying response templates for selection for the k largest probability values in the array of probabilities.

8. The computer-implemented method of claim 1, wherein generating at least a subset of tokens for display comprises displaying tokens for selection associated with the k largest computed contribution values.

9. The computer-implemented method of claim 1, comprising:
requesting text data comprising the indicated tokens and an indication of a correct response template;
receiving the text data and the indication of the correct response template;
adding the text data and the indication of the correct response template to training data for the trained predictive model; and
re-training the trained predictive model using the updated training data.

10. The computer-implemented method of claim 1, wherein the numeric array comprises values representative of one of:
a token count for tokens within the predefined set of tokens;
a term-frequency document-inverse-frequency count for tokens within the predefined set of tokens; and
a sequence of integer identifiers for tokens within the predefined set of tokens.

11. The computer-implemented method of claim 1, wherein the method is performed on a selected batch of text data representing a plurality of user queries.

12. The computer-implemented method of claim 1, wherein adjusting parameters of the trained predictive model comprises reducing the values of parameters of the model associated with the incorrect class and each indicated token.

13. The computer-implemented method of claim 1, comprising:
receiving an indicated one of the displayed list of response templates;
populating the indicated response template with user data to generate a response; and
sending the response to the user.

14. A system for adjusting a dialogue system comprising:
a conversational agent comprising at least a processor and a memory to receive one or more user messages from a client device over a network and send agent messages in response to the one or more user messages;
a template database comprising response templates for use by the conversational agent to generate agent messages;
a trained predictive model comprising data indicative of stored values for a plurality of model parameters, the trained predictive model being configured to receive a numeric array and output an array of probabilities, each element in the numeric array being associated with one of a predefined set of tokens, each token comprising a sequence of character encodings, a probability in the array of probabilities being associated with a response template from the template database;
a feedback engine comprising at least a processor and a memory to:
apply the trained predictive model to a numeric array generated based on text data received from a client device to generate an array of probabilities associated with a plurality of response templates in the template database;
receive an indication of an incorrect response template in the plurality of response templates that is to be disassociated with the text data;
compute a contribution of elements in the numeric array to an output of the trained predictive model for the incorrect response template;
receive an indication of one or more tokens whose computed contribution values are to be reduced with reference to the incorrect response template; and
adjust the data indicative of the stored values of the trained predictive model to reduce the contribution of the indicated tokens.

15. A non-transitory computer readable medium containing computer program instructions to cause a processor to:
load text data representative of one or more messages received from a user;
convert the text data to a numeric array, each element in the numeric array being associated with one of a predefined set of tokens, each token comprising a sequence of character encodings;
apply a trained predictive model to the numeric array to generate an array of probabilities, a probability in the array of probabilities being associated with a response template for use in responding to the one or more messages;
generate, for display to an operator of the conversational agent, a list of response templates ordered based on the array of probabilities;
receive, from the operator of the conversational agent, data indicating an incorrect response template that is to be disassociated with the one or messages;
compute a contribution of elements in the numeric array to an output of the trained predictive model for the incorrect response template;
generate, for display to the operator of the conversational agent, at least a subset of tokens from the predefined set of tokens based on the computed contribution;
receive, from the operator of the conversational agent, data indicating one or more of the displayed tokens that are to be disassociated with the incorrect response template; and
adjust parameters of the trained predictive model to reduce the contribution of the indicated tokens for the incorrect response template.
